# EUROPEAN PATENT SPECIFICATION

(11) **EP 0 773 897 B1**
(45) Date of publication and mention of the grant of the patent: **15.12.1999**
(21) Application number: 95918136.3
(22) Date of filing: 09.05.1995
(51) Int. Cl.: B65G 47/91, B65G 57/04, B65G 59/04

(54) **A GRID ELEMENT AND AN APPARATUS INCORPORATING THE GRID ELEMENT FOR ASSISTING IN THE STACKING AND DESTACKING OF PRODUCTS FROM A SURFACE**
GITTERKÖRPER UND VORRICHTUNG MIT GITTERKÖRPER ZUM STAPELN ODER ENTSTAPLELN VON PRODUKTEN
ELEMENT FORMANT GRILLE ET APPAREIL DANS LEQUEL IL EST INTEGRE AFIN DE FACILITER LA MANIPULATION DE PRODUITS EMPILABLES SUR UNE SURFACE

(30) Priority: 09.05.1994 IE 940381
(43) Date of publication of application: 21.05.1997
(73) Proprietor: AUTOCAST INVENTIONS LIMITED, Kill County Kildare (IE)
(72) Inventor: VAN DEN BERGH, John, Kill County Kildare (IE)
(74) Representative: Casey, Lindsay Joseph
(86) International application number: IE9500029
(87) International publication number: WO9530615

(56) References cited:
- EP-A- 0 351 571
- FR-A- 2 025 500
- FR-A- 2 184 072
- GB-A- 1 164 766
- US-A- 3 406 938

## Description

This invention relates to an apparatus incorporating a grid element for assisting in the stacking and destacking of products from a surface or pallets and for full layer order picking operations.

A pallet is a portable platform for transporting and storing a load. Sometimes, a pallet may be loaded with a single object and on other occasions may be loaded with a plurality of objects generally of the same or different sizes. The present invention is directed to, but not limited to, the placement or removal of a plurality of objects on or from a pallet or many different pallets using an apparatus of the kind which employs suction means for raising the object(s).

A lifting apparatus employing suction means is known. The known apparatus employs a suction head which applies a vacuum over the whole top surface of the object or objects to be lifted via a vacuum chamber fitted with side-sealing curtains which prevent air leakage around the sides of the object. A centrifugal fan provides the vacuum. The vacuum is applied and released by automatically operated valves.

A problem arises when the apparatus lifts a plurality of objects on a layer or tier and one or more of them is absent or the pattern of the tier is such that a large number of small voids have been created. In such instance, the vacuum is partially or wholly destroyed by virtue of voids or absent object(s) and hence, the apparatus will fail to function correctly.

French Patent Specification No. FR-A-2 184 072, which corresponds to the pre-characterising part of claim 1, describes a solution to this problem by providing a grid element for such an apparatus which is divided into a two-dimensional array of cells each having an individual valve in each cell. Where there are voids or absent objects under a cell the respective valve is drawn into a position to close the cell and thereby maintains vacuum in the vacuum chamber. Where an object is present the valve falls to a position wherein the cell is open and vacuum is applied to the surface of the object.

However, the prior art does not address the problem of lifting objects whose upper surface is at an angle to the grid element, for example because a pallet on which a load rests is sloping at an angle to the ground.

An object of the present invention is to overcome this problem.

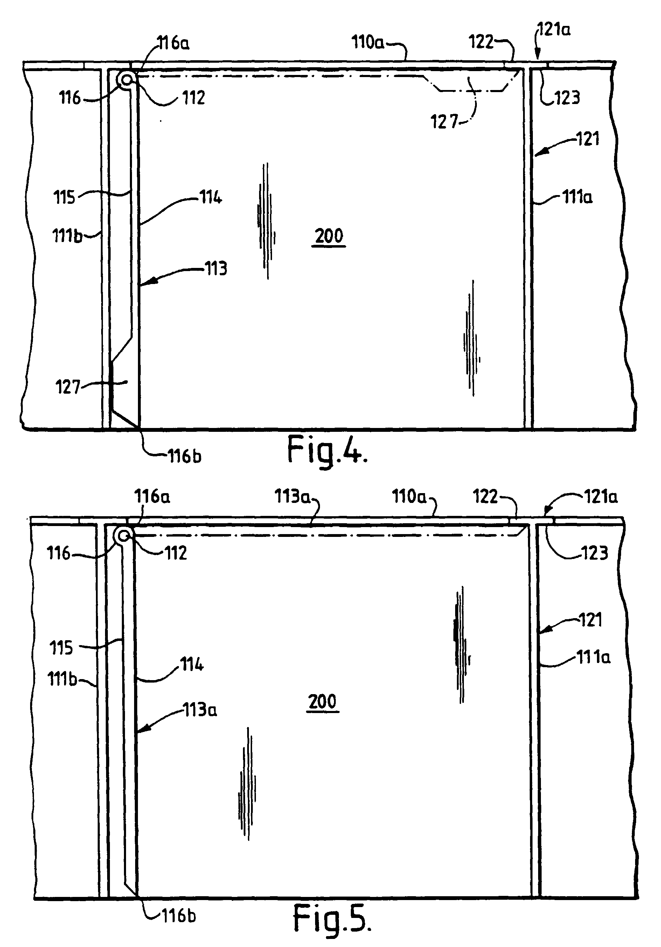

The invention, therefore, provides an apparatus for lifting one or more objects by means of suction, which apparatus comprises a vacuum chamber, a grid element forming the floor of the vacuum chamber, and means for creating a vacuum in the vacuum chamber, the grid element comprising a two-dimensional array of cells each of which opens directly onto each opposite major surface of the grid element, each cell having at least one valve member for closing and opening of the cell, the valve member(s) normally assuming a first position (Fig. 4, solid lines) wherein the cell is open to provide direct communication through the cell between the opposite major surfaces of the grid element but being movable by a sufficient flow of air through the cell into a second position (Fig. 4, dashed lines) wherein the cell is substantially closed against such communication, characterised in that each valve member comprises a flap valve pivoted for rotation between the first position and the second position, and means for supporting the grid element within the vacuum chamber, wherein the grid element is capable of upward and downward movement in the vacuum chamber away from and towards the base of the vacuum chamber.

The invention will be understood in greater detail from the following description of preferred embodiments thereof given by way of example only and with reference to the accompanying drawings in which:-
Figure 1 is a perspective view of an apparatus according to the invention;
Figure 2 is a detail of part of the apparatus of Figure 1 of the drawings;
Figure 3 is a perspective view of a first embodiment of a grid according to the invention for use in the apparatus of Figure 1 of the drawings;
Figure 4 is an elevation of part of the grid of Figure 3 of the drawings;
Figure 5 is an elevation of part of a second embodiment of a grid according to the invention;
Figure 6 is an elevation of part of a third embodiment of a grid according to the invention;
Figure 7 is a cross-sectional view of the floating grid according to the embodiment of the invention; and
Figures 8 and 9 are cross-sectional views of the grid of Figure 7 shown in use.

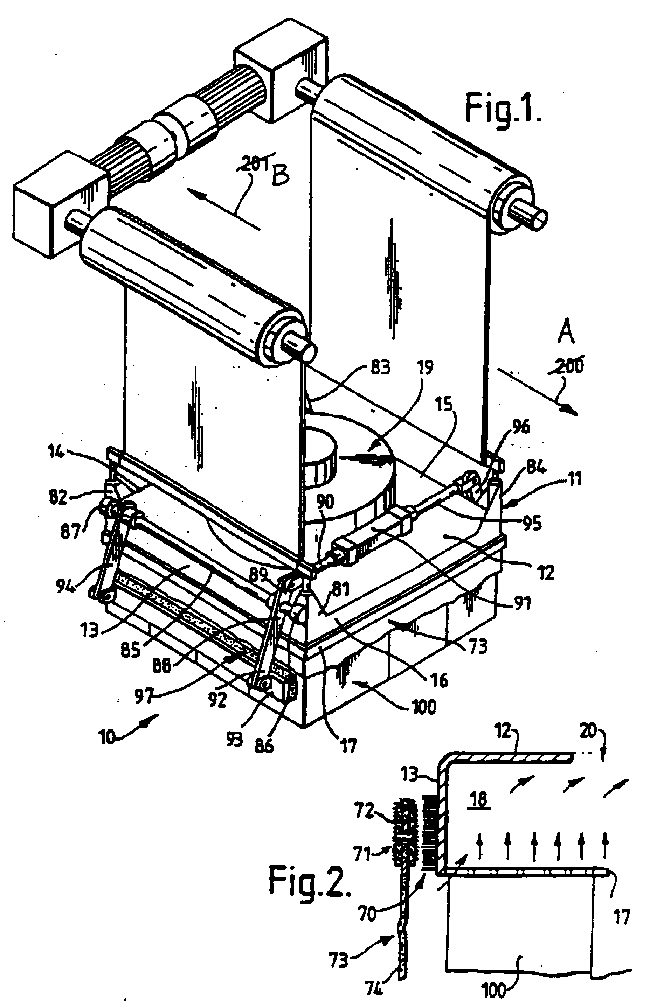

Referring now to the drawings and in particular to Figures 1-2 thereof, there is shown an apparatus 10 according to the invention which comprises a head 11 of box-shape construction having a top 12, side walls 13, 14, 15, 16 and a base all of which define a plenum chamber 18. Mounted on the top 12 is a centrifugal fan 19 operable at a relatively high RPM and capable of generating via a vacuum inlet valve (not shown) a reduced pressure area in the chamber 18 via an opening 20 in the top 12. The floor of the plenum chamber comprises a grid 17 which defines a plurality of openings.

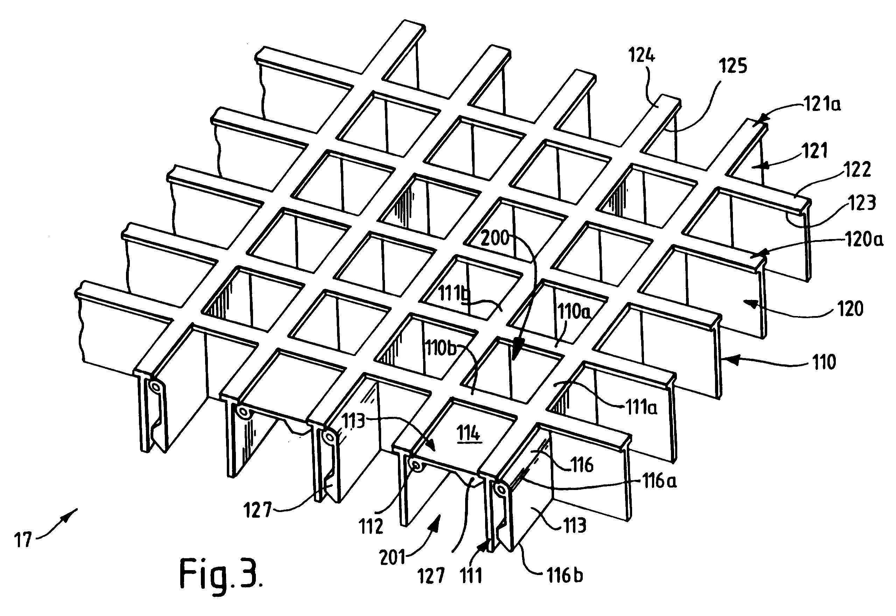

With particular reference to Figures 3 - 5, there is shown a construction of a grid 17 according to the invention primarily for use where, for example, there is a relatively large number of containers per unit area with an indeterminate number of unknown voids located anywhere about the unit area.

The grid 17 comprises laterally disposed members 110 and transversely disposed members 111 which form a plurality or matrix of voids or openings. The laterally disposed members 110 are T-shaped in cross-section as are the transversely disposed members 111. Thus, each of the members 110 comprises a leg 120 and an associated cross piece 120a; each of the members 111 comprises a leg 121 and an associated cross piece 121a. Each cross piece 120a has an upper face 122 and lower faces 123; each cross piece 121a has an upper face 124 and lower faces 125.

With particular reference to two adjacent single cells 200 and 201 of the grid 17, the laterally disposed members 110a, 110b and the transversely disposed members 111a and 111b form a substantially rectangularly shaped opening. Mounted in suitable holes (not shown) between the transversely disposed members 111a, 111b is a pivot bar 112. The bar 112 is located in substantially parallel spaced apart relationship relative to the laterally disposed members 110a, 110b. In addition, the bar 112 is located adjacent to the member 110b.

In pivotal arrangement on the bar 112 is a flap valve member 113. The valve member 113 has a first or upper face 114 and a second or lower face 115. The valve member 113 is substantially rectangular in shape. The upper face 114 is substantially flat. The lower face 115 embraces a tubular portion 116, located adjacent one edge 116a, for engaging with the bar 112. A projection 127 is located adjacent an edge 116b opposite the edge 116a and projects from the lower face 115. The projection 127 may be of a suitable shape or weight configuration for reasons to be described later in the Specification.

With particular reference to Figure 5 of the drawings, a flap valve member 113a is shown which is similar in construction to the flap valve member 113 except that both faces 114, 115 are substantially flat and without the projection 127.

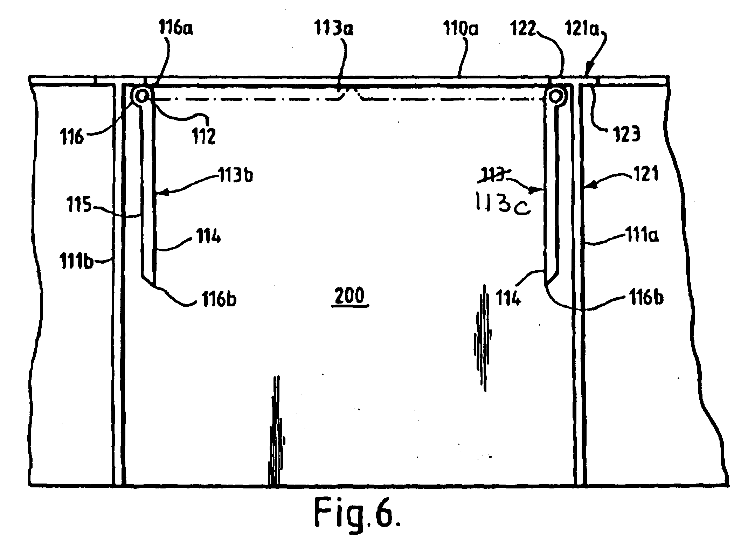

With particular reference to Figure 6 of the drawings, there is shown a pair of flap valve members 113b and 113c. Each of the flap valve members 113b and 113c is similar in construction to the flap valve member 113a, is mounted in a similar fashion, and operates in a similar fashion to the flap valve member 113a. However, because, there are two valve members 113b and 113c, which operate in the manner of a trap door, it is possible for one of the flaps to be in the open condition of use while with the other in the closed condition of use. Of course, it is also possible for both flap valve members 113b and 113c to be simultaneously in the open condition of use or simultaneously in the closed condition of use.

The flap valve member 113 by virtue of the location of the tubular portion 116 *vis-a-vis* the bar 112 is biased into the lower or open condition (see Figure 4). When in the closed condition as shown in dotted outline in Figure 4, the valve member 113 abuts the lower faces 123, 125 thereby closing the opening of that cell 200 associated therewith.

Referring to Figures 1 and 2 of the drawings, and in order to ensure that the vacuum is optimally employed, a side seal curtain or skirt 73 is provided. A quick release fitting is provided one part 70 of which is applied by means of a suitable adhesive to the side walls 13-16 and the other part 71 of the quick release fitting is applied to one end 72 of the curtain or skirt 73. The skirt 73 is quickly and easily applied to the side walls 13-16 so that the other end 74 thereof projects downwardly thereby providing a suitable seal. When it is desired to change the skirt 73, the end 74 is gripped so as to pull the end 73 away from the part 70. A replacement skirt 73 can be quickly and easily positioned on the side walls 13-16.

Referring now to Figure 1 of the drawings, the top 12 further comprises four upstanding arms 81-84 each of which is located at a corner of the top 12. Connecting the arms 81, 82 is a shaft 85 being adapted for rotational movement between a pair of guide elements 86, 87 attached to the arms 81, 82 respectively.

Attached to one end of the shaft 85 is a gripper arm 88 one end 89 of which is pivotally connected to a first piston 90 of a linear actuator 91 the other end 92 of which gripper arm 88 is pivotally attached to one end of first side gripper element 93. The other end of the shaft 85 has a gripper arm 94 attached thereto the free end of which is pivotally attached to the other end of the gripper element 93. The actuator 91 has a second piston 95 the free end of which is pivotally connected to one end of a gripper arm 96. The other end of the gripper arm 96 is attached to a shaft (not shown) of similar construction to the shaft 85, said shaft also having a gripper arm (not shown) similar to the gripper arm 94 and providing a second side gripper element similar to the side gripper element 93. The gripper element 93 and its opposite counterpart each has suitable rubber padding 97 on opposing faces thereof.

Hoisting and lowering of the head 11 is achieved by the remainder of the apparatus shown in Figure 1 which remainder is of known construction and need not be described in detail here.

In use, the apparatus 10 operates as follows. It is desired to transfer the load 100 comprising a plurality of cartons from one location to, for example, a pallet 300. The head 11 is lowered. The grid 17 is attached to the base.

All the flap valve members 113 (or 113a) are in the first or open condition as shown in solid outline in Figure 4 (or Figure 5) of the drawings and, with the vacuum inlet valve closed, no auction emanates from below the grid 17. As the head 11 is lowered, the skirt 73 embraces the load 100 and the vacuum inlet valve is opened. When a container is present, the associated opening is closed by the presence of the container and the flap valve member 113 (or 113a) remains in the open condition. For an opening which is not occluded by a container or is not, for example, more than between 75%-80% occluded, the air flow is counterbalanced by the weight of the flap valve member 113 (or 113a). In the case of the flap valve member 113, it is the projection 127 which primarily determines the weight which biases the member 113 into the open condition.

Accordingly, having regard to the weight of the flap valve member 113 (or 113a) and the volume of air passing through the opening, there is now a tendency for the flap valve member 113 (or 113a) to begin to pivot in the direction of the closed condition of the valve member 113 (or 113a). As the member 113 (or 113a) pivots further in the direction of the closed condition, the lower face 115 becomes increasingly exposed to the flow of air through the opening to the extent that the valve member 113 (or 113a) rapidly assumes the closed condition thereby closing that opening and helping to maintain the overall vacuum seal in the plenum chamber 18. If on the other hand, a container covers for example, less than 75%-80% of the opening, the volume of air would not be strong enough to lift up the flap valve member 113 (or 113a) which would remain in the open condition. In that event, the opening would be effectively sealed by the container. It will be appreciated, therefore, that, if on balance, there is a certain amount of an opening being blocked by a portion of a container, suction may be allowed to continue to act as the flap valve member 113 (or 113a) would not close and yet the power of the centrifugal fan would be sufficient to compensate for the resultant overall vacuum loss.

The grid 17 may, if desired, be floating in the plenum chamber, i.e. it is capable of adjusting itself depending on the horizontal surface of the containers it is picking up.

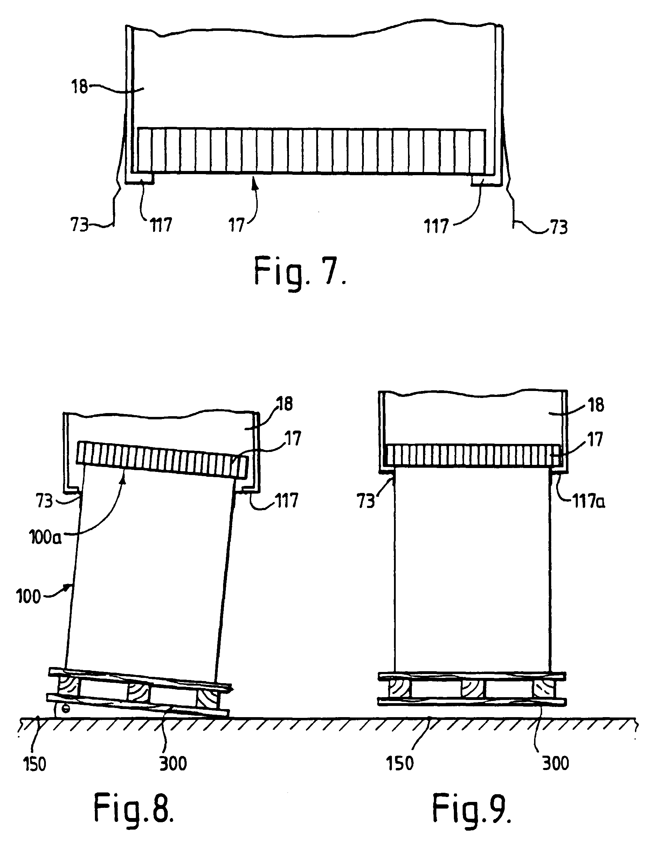

Thus with particular reference to Figures 7-9, there is shown the grid 17 housed in the plenum chamber 18 as previously described. The base of the plenum chamber comprises inward projections 117 upon which passively rests the grid 17. Therefore the grid 17 is free to move upwardly or downwardly, or float within the plenum chamber 18.

Thus, if in the event that the load 100 to be lifted does not have a horizontally disposed surface 100a (Figures 8-9) but instead has a sloping surface (because, for example, the pallet 300 on which the load 100 rests is sloping at an angle θ relative to the ground 150), as the head 11 is lowered and ensuring that the load 100 can be contained within the gap between the inward projections 117, the uppermost part of the load 100 first engages with the grid 17 thereby pushing the grid 17 off the inward projections 117 and further into the plenum chamber 18. When the head 11 is raised, the projections 117a eventually engage with the grid 17 to enable the load 100 to be lifted in a now horizontally disposed condition relative to the ground 150 (Fig.9).

In addition, each corner of the grid 17 may be provided with a respective proximity detector all of which must detect an object before a "lift" can occur. Thus the only weight being applied to the surface of the containers 100 is the weight of the grid 17 which is, preferably, made from a relatively light material such as aluminium.

The head 11 is raised having the load 100 attached by suction and the entire apparatus 10, being mounted on a suitable traversing means (not shown) moves in the direction of the arrow A or B as desired to the required location. At the required location, the head 11 is lowered so as to place the load 100 on the pallet or on an existing load on the pallet, the vacuum inlet valve is closed thereby releasing the load 100 from the head 11, the head 11 is raised and the apparatus 10 traverses in the direction of the next load. All the flap valve members 113 (or 113a) automatically return to the first or open condition.

A load 100 of up to about 300 kg may be lifted at any one time.

Sometimes, the apparatus 10 is used in locations which are subject to electrical power cuts resulting in a loss of vacuum due to stoppage of the fan 19. Under normal conditions, the linear actuator 91 is powered by the electrical power supply so as to maintain the gripper elements 93 in the open or non-contacting condition. Should there be an interruption in the power supply, or when the vacuum measured in the chamber 18 falls to a predetermined value, the actuator 91 is automatically actuated so as to cause the pistons 90, 95 to be pushed outwardly thereby causing the gripper elements 93 to close on the load 100. The time taken for the gripper elements 93 to close on the load 100 is considerably shorter than the period of time which the vacuum ceases to exist as a result of stoppage of the fan 19 and hence, the load 100 is prevented from falling to the ground.

Upon restoration of the electrical supply, the fan 19 is again placed automatically in the operative condition and the linear actuator is manually reset thereby opening the gripper elements 93. The padding 97 serves to prevent damage to the load 100 when the gripper elements 93 are in contact with the load 100.

When the apparatus 10 reaches the location it is desired to release the load 100, as soon as the load 100 touches the surface on which it is to be placed, there is an immediate reduction in the mass or weight acting on the load cell apparatus. This reduction in mass can be as low as a few grams. It will be appreciated that the surface onto which the load 100 is placed can be a conveyor, a floor or a pallet or a previously loaded load or loads mounted on the pallet. To ensure that the head 11 and its associated load 100 does not crash down on top of the pallet *per se* or on top of the existing load on the pallet, a suitable detecting mechanism can be used to detect the distance between the load 100 on the head 11 and the top surface of the pallet or an existing load on the pallet.

Accordingly, it is possible for the lowering to take place at a relatively high speed just prior to contact of the load 100 with the top surface of the pallet or an existing load in which case, the speed of descent of the head 11 is reduced to a relatively slow rate.

## Claims

1. An apparatus for lifting one or more objects by means of suction, which apparatus comprises a vacuum chamber (18), a grid element (17) forming the floor of the vacuum chamber (18), and means (19) for creating a vacuum in the vacuum chamber (18), the grid element (17) comprising a two-dimensional array of cells (200) each of which opens directly onto each opposite major surface of the grid element, each cell having at least one valve member (113) for closing and opening of the cell, the valve member(s) (113) normally assuming a first position (Fig. 4, solid lines) wherein the cell is open to provide direct communication through the cell between the opposite major surfaces of the grid element but being movable by a sufficient flow of air through the cell into a second position (Fig. 4, dashed lines) wherein the cell is substantially closed against any such communication,
characterised in that each valve member comprises a flap valve (113) pivoted for rotation between the first position and the second position, and means (117) for supporting the grid element (17) within the vacuum chamber (18), wherein the grid element (17) is capable of upward and downward movement in the vacuum chamber (18) away from and towards the base of the vacuum chamber (18).

2. An apparatus as claimed in Claim 1 wherein the supporting means comprises a projection (117) at the base of the vacuum chamber so that the grid element (17) is capable of upward and downward movement away from and towards the projection (117).

3. An apparatus as claimed in Claim 1 or 2 wherein each flap valve (113) is biased into the first position solely by its weight.

4. An apparatus as claimed in Claim 3 wherein each flap valve (113) has a projection (127) located adjacent an edge remote from the axis of rotation (112) which projection provides additional weight to the valve to bias the valve into the first position.

5. An apparatus as claimed in any of Claims 1 to 4 wherein each cell (200) has a pair of flap valves (113, 133b) so that, in use, both flap valves may be simultaneously in the first position or simultaneously in the second position or one of the valves may be in the first position while the other one may be in the second position.

6. An apparatus as claimed in any of Claims 1 to 5, further comprising a pair of opposing gripper elements (93) operatively associated with the vacuum chamber (18) and movable between a first position in which the gripper elements are not in positive gripping contact with a load (100) attached to the vacuum chamber (18) and a second position in which the gripper elements grip a load (100) attached to the vacuum chamber (18), and wherein means (91) are provided for automatically moving the gripper elements (93) to the second position when the vacuum at the vacuum chamber (18) falls to a predetermined level.

## Patentansprüche

1. Vorrichtung zum Heben eines oder mehrerer Gegenstände mit Hilfe von Saugkraft, wobei die Vorrichtung folgendes aufweist: eine Vakuumkammer (18), ein den Boden der Vakuumkammer (18) bildendes Gitterelement (17) und Mittel (19) zum Erzeugen eines Vakuums in der Vakuumkammer (18), wobei das Gitterelement (17) eine zweidimensionale Anordnung von Zellen (200) aufweist, die sich jeweils direkt zu jeder gegenüberliegenden Hauptfläche des Gitterelements hin öffnen, wobei jede Zelle wenigstens ein Ventilelement (113) zum Schließen und Öffnen der Zelle hat, wobei das/die Ventilelement(e) (113) normalerweise eine erste Position (Fig. 4, durchgezogene Linien) einnimmt/einnehmen, in der die Zelle offen ist, um direkte Kommunikation zwischen den einander gegenüberliegenden Hauptflächen des Gitterelements durch die Zelle hindurch bereitzustellen, aber durch einen ausreichenden Luftstrom durch die Zelle hindurch auf eine zweite Position (Fig. 4, gestrichelte Linien) bewegbar ist, in der die Zelle gegen jede derartige Kommunikation weitgehend geschlossen ist,
dadurch gekennzeichnet, daß jedes Ventilelement ein zur Drehung zwischen der ersten Position und der zweiten Position angelenktes Klappenventil (113) und Mittel (117) zum Tragen des Gitterelements (17) in der Vakuumkammer (18) aufweist, wobei das Gitterelement (17) zur Auf- und Abwärtsbewegung in der Vakuumkammer (18) von der Unterseite der Vakuumkammer (18) weg und zu ihr hin fähig ist.

2. Vorrichtung nach Anspruch 1, bei der das Tragmittel einen Vorsprung (117) an der Unterseite der Vakuumkammer umfaßt, so daß das Gitterelement (17) zur Auf- und Abwärtsbewegung vom Vorsprung (117) weg und zu ihm hin fähig ist.

3. Vorrichtung nach Anspruch 1 oder Anspruch 2, bei der jedes Klappenventil (113) lediglich durch sein Gewicht in die erste Position vorbelastet wird.

4. Vorrichtung nach Anspruch 3, bei der jedes Klappenventil (113) einen Vorsprung (127) hat, der an einen von der Drehungsachse (122) entfernten Rand angrenzend angeordnet ist, wobei der Vorsprung dem Ventil zusätzliches Gewicht verleiht, um das Ventil in die erste Position vorzubelasten.

5. Vorrichtung nach einem der Ansprüche 1 bis 4, bei der jede Zelle (200) ein Paar Klappenventile (113, 133b) hat, so daß im Gebrauch beide Klappenventile gleichzeitig in der ersten Position oder gleichzeitig in der zweiten Position sein können oder eines der Ventile in der ersten Position sein kann, während das andere in der zweiten Position sein kann.

6. Vorrichtung nach einem der Ansprüche 1 bis 5, die des weiteren ein Paar einander gegenüberliegender Greiferelemente (93) aufweist, die funktionsmäßig der Vakuumkammer (18) zugeordnet sind und zwischen einer ersten Position, in der die Greiferelemente nicht in formschlüssigem Greifkontakt mit einer Last (100) sind, die an der Vakuumkammer (18) angebracht ist, und einer zweiten Position, in der die Greiferelemente eine an der Vakuumkammer (18) angebrachte Last (100) greifen, bewegbar sind, und bei der Mittel (91) zum automatischen Bewegen der Greiferelemente (93) auf die zweite Position bereitgestellt sind, wenn das Vakuum in der Vakuumkammer (18) auf einen vorbestimmten Pegel abfällt.

## Revendications

1. Un appareil pour soulever un objet ou davantage par aspiration, ledit appareil englobant une chambre à vide (18), un élément à grille (17) qui forme le plancher de la chambre à vide (18), et des moyens (19) pour créer un vide dans la chambre à vide (18), l'élément à grille (17) englobant un groupe bidimensionnel de cellules (200) dont chacune s'ouvre directement sur chaque surface majeure opposée de l'élément à grille, chaque cellule ayant au moins un élément à soupape (113) pour ouvrir et fermer la cellule, l'élément à soupape (ou les éléments)(113) adoptant normalement une première position (Figure 4, traits pleins) en laquelle la cellule est ouverte pour produire une communication directe à travers la cellule entre les surfaces majeures opposées de l'élément à grille mais pouvant être déplacée par un écoulement d'air suffisant à travers la cellule jusqu'à une deuxième position (Figure 4, traits pointillés) en laquelle la cellule est sensiblement fermée contre toute communication de cette nature,
caractérisé en ce que chaque élément à soupape englobe un papillon (113) pivoté pour la rotation entre la première position et la deuxième position, et des moyens (117) pour supporter l'élément à grille (17) à l'intérieur de la chambre à vide (18), l'élément à grille (17) étant capable de se mouvoir vers le haut et le bas dans la chambre à vide (18) pour s'écarter et se rapprocher du plancher de la chambre à vide (18).

2. Un appareil selon la revendication 1, dans lequel les moyens de support englobent une saillie (117) à la base de la chambre à vide, de façon telle que l'élément à grille (17) est capable de se mouvoir vers le haut et le bas pour s'écarter et se rapprocher de la saillie (117).

3. Un appareil selon la Revendication 1 ou 2, dans lequel chaque papillon (113) est rappelé jusqu'à la première position par son poids uniquement.

4. Un appareil selon la Revendication 3, dans lequel chaque papillon (113) a une saillie (127) adjacente à un bord éloigné de l'axe de rotation (112), ladite saillie conférant un poids supplémentaire au papillon pour rappeler le papillon jusqu'à la première position.

5. Un appareil selon l'une quelconque des Revendications 1 à 4, dans lequel chaque cellule (200) a une paire de papillons (113, 133b) de façon telle que, pendant l'emploi, les deux papillons peuvent être simultanément en la première position ou simultanément en la deuxième position, ou l'un des papillons peut être an la première position tandis que l'autre peut être en la deuxième position.

6. Un appareil selon l'une quelconque des Revendications 1 à 5, qui englobe de plus une paire d'éléments de saisie opposés (93) qui fonctionnent conjointement avec la chambre à vide (18) et peuvent se déplacer entre une première position en laquelle les éléments de saisie ne sont pas en contact de saisie positive avec une charge (100) attachée à la chambre à vide (18) et une deuxième position en laquelle les éléments de saisie saisissent une charge (100) attachée à la chambre à vide (18), et dans lequel des moyens (91) sont prévus pour amener automatiquement les éléments de saisie (93) jusqu'à la deuxième position lorsque le vide de la chambre à vide (18) baisse jusqu'à un niveau prédéterminé.
